**Europäisches Patentamt**

**European Patent Office**

**Office européen des brevets**

(11) Veröffentlichungsnummer: **0 186 743**
**A1**

(12) **EUROPÄISCHE PATENTANMELDUNG**

(21) Anmeldenummer: **85112991.6**

(22) Anmeldetag: **14.10.85**

(51) Int. Cl.⁴: **B 65 G 47/46**

(30) Priorität: **21.12.84 DE 3446805**

(43) Veröffentlichungstag der Anmeldung: **09.07.86**
**Patentblatt 86/28**

(84) Benannte Vertragsstaaten: **AT BE CH DE FR GB IT LI NL SE**

(71) Anmelder: **MANNESMANN Aktiengesellschaft, Mannesmannufer 2, D-4000 Düsseldorf 1 (DE)**

(72) Erfinder: **Jahns, Werner, Dipl.-Ing., Ellenseestrasse 31, D-6453 Seligenstadt (DE)**

(54) Förderanlage.

㉗ Von einem Hauptförderer (1) zweigen nach beiden Seiten Sortierförderer (2) ab, die in einer Richtung nur angedeutet sind. Den Sortierförderern (2) ist, wenn es für das Fördergut erforderlich ist, eine angetriebene Mitnehmerrolle (2a) vorgelagert, die eine Oberfläche mit großem Reibwert haben kann und zur Erhöhung der Mitnahmewirkung auch etwas über die Oberfläche des Förderbandes (5) des Hauptförderers (1) hinausragen kann. Vor den Sortierförderern (2) sind Ausschleuseinrichtungen mit heb- und senkbaren sowie in Ausschleusrichtung schwenkbaren Austragscheiben (3) angeordnet; die Austragscheiben (3a) zwischen den Seitenführungen (4) am Anfang der Förderanlage sind zum Vorsortieren des Fördergutes vorgesehen und leiten es gegen eine der Seitenführungen (4).

Die Erfindung betrifft eine Förderanlage mit von einem Hauptförderer abzweigenden Sortierförderern und in dem Hauptförderer vor den Sortierförderern angeordneten, heb- und senkbaren, in Ausschleusrichtung weisenden Ausschleusscheiben.

Bei einer Förderanlage dieser Art nach der US-PS 4,328,889 sind die Ausschleusscheiben in eine Richtung fixiert, so daß an einem Hauptförderer nicht sich gegenüberliegende Sortierförderer angeschlossen sein können, was jedoch oft wünschenswert ist.

Aufgabe der Erfindung ist es daher, eine Förderanlage der eingangs beschriebenen Art so zu gestalten, daß das Ausschleusen des Fördergutes vom Hauptförderer wahlweise nach der einen oder anderen Seite möglich ist. Diese Aufgabe wird dadurch gelöst, daß die Ausschleusscheiben mit ihren waagerechten Achsen an senkrechten, in Führungen heb- und senkbaren sowie in Ausschleusrichtung richtbaren Schwenkwellen gelagert sind. Diese haben jeweils einen in Richtung des Hauptförderers nach vorne oder hinten gerichteten Hebelarm, die alle mit einer gemeinsamen, quer zum Hauptförderer verschiebbaren Koppelstange verbunden sind. Außerdem stützt sich mindestens einer der Hebelarme mit einem Kulissenfühler auf einer Kulissenschale ab, die in der Mitte die niedrigste Stelle hat und zu den Seiten so weit ansteigt, wie es zum Herausleiten des Fördergutes aus dem Hauptförderer erforderlich ist. Um dieses Maß werden die Ausschleusscheiben angehoben, die das Fördergut zum gewünschten Sortierförderer hinleiten, der an der Anschlußstelle zum Hauptförderer eine Mitnehmerrolle haben kann. Diese kann auch etwas über den Hauptförderer hinausragen und eine Oberfläche mit hohem Reibwiderstand haben. Die Mitnehmerrolle leitet das Fördergut dann, wenn es von den Austragscheiben nur zum Sortierförderer hinbewegt wurde, sicher auf den Sortierförderer.

.....

In weiterer Ausgestaltung der Erfindung sind alle Hebelarme der Schwenkwellen mit Kulissenfühlern auf Kulissenschalen abgestützt, wobei die Kulissenführer Kugelköpfe oder auf den Kulissenschalen gut gleitende Hutmuttern sind. Die Kulissen können auch Führungsrillen sein, in die von der Stirnseite her an den Hebelarmen befestigte Kulissenstifte hineinragen. Bei ausreichender Festigkeit der erwähnten Koppelstange genügt es, wenn die Hebelarme der äußeren Austragscheiben auf Kulissen abgestützt sind; die dazwischen liegenden Austragscheiben können dann mit den Hebelarmen der Schwenkwellen an der Koppelstange abgestützt sein.

Die Koppelstange ist in weiterer Ausgestaltung der Erfindung über einen Mitnehmerstift mit einem ein Dreieck bildenden Eckhebel verbunden, der neben den Schwenkwellen mit einem senkrechten Lagerbolzen an einem Lagerträger gelagert ist und an dem eine Kolbenstange eines Stellmotors angreift. Dieser ist mit seiner Längsachse parallel zum Hauptförderer so angeordnet, daß bei halb ausgefahrener Kolbenstange Lagerbolzen und Mitnehmerstift des Eckhebels zusammen mit der Schwenkwelle und der Befestigung seines Hebelarms an der Koppelstange ein Rechteck bilden. Beim Einziehen oder vollen Ausfahren der Kolbenstange wird dieses Rechteck zu einem Parallelogramm verschoben, wobei alle Kulissenfühler auf den Kulissenschalen kreisbogenförmig entlanggleiten und wegen der Kulissenführung angehoben werden.

Der Antrieb der Austragscheiben erfolgt vom Förderband aus, das um eine Umlenktreibrolle geführt ist. Diese hat auf ihrer Welle eine Treibscheibe für einen elastischen Treibgurt, der beim Anheben einer mit den Austragscheiben in Verbindung stehenden Scheibe gedehnt wird.

In weiterer Ausgestaltung der Erfindung kann vor jedem Sortierförderer eine Austragscheibe neben der Förderbahn angeordnet

.....

sein. Sie reicht aus, wenn das Fördergut auf der auszuschleusenden Seite über das Förderband hinausragt und nach einer Bewegung durch die Austragscheibe von einer Mitnehmerrolle des Sortierförderers weiterbewegt wird. Das Förderband kann auch in zwei Seitenstreifen unterteilt sein, zwischen denen nach beiden Seiten schwenkbare Austragscheiben angeordnet sein können. In allen Fällen können die Austragscheiben durch über diesen angeordnete Friktionsscheiben unterstützt werden, deren Ausschleusrichtung mit denen der Austragscheiben übereinstimmt. Die Austragscheiben sind vorzugsweise entgegen der Kraft von Federn heb- und senkbar angeordnet, damit etwaige Dickenunterschiede zwischen den Fördergütern ausgeglichen werden.

Mehrere Ausführungsbeispiele der Erfindung sind in den Zeichnungen dargestellt und im folgenden erläutert. Es zeigen:

Fig. 1    eine Draufsicht auf einen Teil einer Förderanlage,

Fig. 2    einen Längsschnitt durch Fig. 1,

Fig. 3    einen Ausschnitt aus Fig. 2 in größerem Maßstab,

Fig. 4    eine Seitenansicht von den Austragscheiben mit deren Unterstützung und Schwenkvorrichtung aus Fig. 3,

Fig. 5    den Schnitt V-V durch die Fig. 4,

Fig. 6    eine andere Förderanlage mit neben dem Hauptförderer angeordneten Austragscheiben,

Fig. 7    den Schnitt VII-VII durch die Fig. 6,

.....

Fig. 8    eine Draufsicht auf eine Förderanlage mit geteiltem
          Förderband,

Fig. 9    eine Kulissenführung in größerem Maßstab.

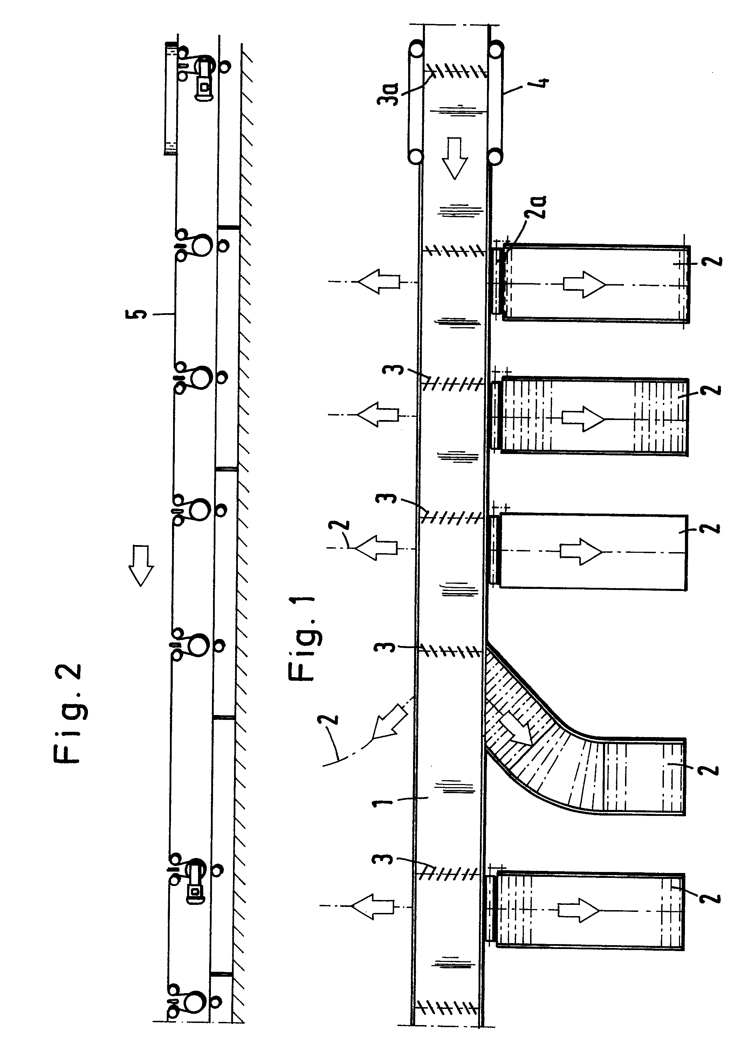

Beim Ausführungsbeispiel nach den Fig. 1 und 2 zweigen von einem
Hauptförderer 1 nach beiden Seiten Sortierförderer 2 ab, die in
einer Richtung nur angedeutet sind. Den Sortierförderern 2 ist,
wenn es für das Fördergut erforderlich ist, eine angetriebene
Mitnehmerrolle 2a vorgelagert, die eine Oberfläche mit großem
Reibwert haben kann und zur Erhöhung der Mitnahmewirkung auch
etwas über die Oberfläche des Förderbandes 5 des Hauptförderers
1 hinausragen kann. Vor den Sortierförderern 2 sind Auschleuseinrichtungen mit heb- und senkbaren Austragscheiben 3 angeordnet; die Austragscheiben 3a zwischen den Seitenführungen 4 am
Anfang der Förderanlage sind zum Vorsortieren des Fördergutes
vorgesehen und leiten es gegen eine der Seitenführungen 4.

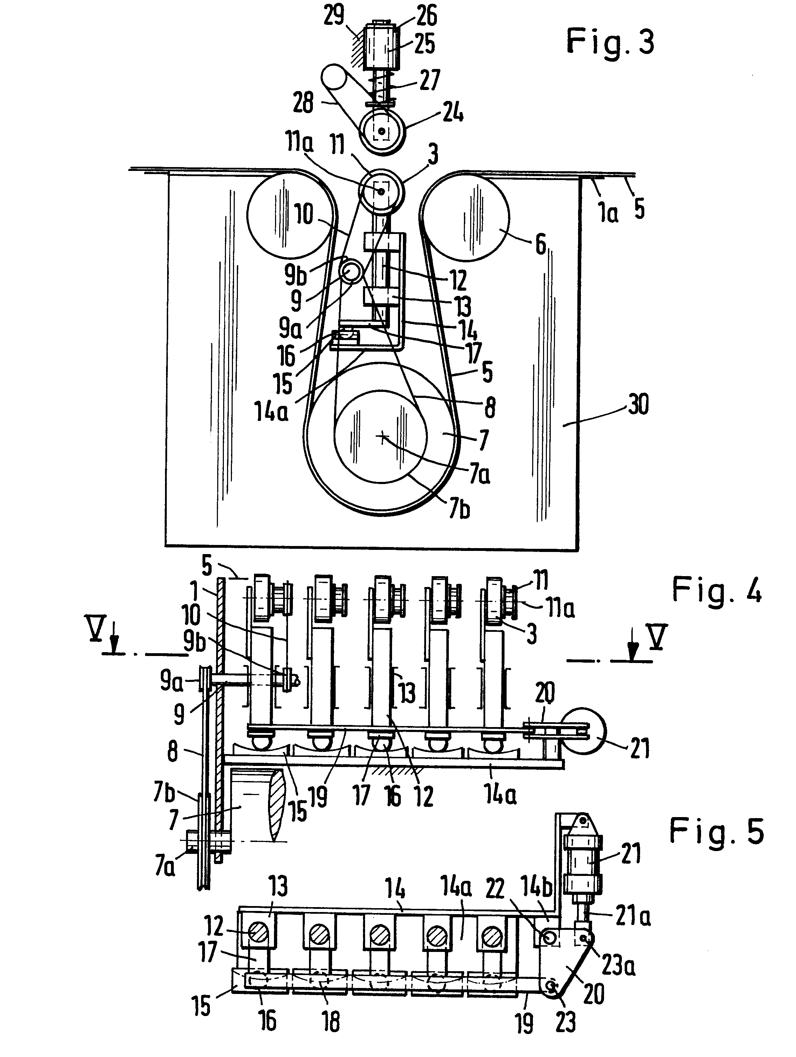

Der Hauptförderer 1 hat in Fig. 3 erkennbare Tragplatten 1a für
das Förderband 5, das im Bereich der Austragscheiben 3 um Umlenkrollen 6 und eine Umlenktreibrolle 7 geführt ist. Auf der
Welle 7a der Umlenktreibrolle 7 ist neben dem Hauptförderer 1
eine Treibscheibe 7b für einen elastischen Treibgurt 8 angeordnet, der über eine Scheibe 9a eine Welle 9 mit mehreren Treibscheiben 9b treibt. Diese treiben über Treibriemen 10 Riemenscheiben 11, die mit ihren zugeordneten Austragscheiben 3 bzw. 3a
zusammen über gemeinsame Achsen 11a an heb- und senkbaren sowie
um die senkrechten Achsen verschwenkbaren Schwenkwellen 12
gelagert sind. Diese sind mit Lagern 13 an Lagerträgern 14
gelagert, die an einer in den Hauptförderer 1 eingesetzten
Lagereinheit 30 angeordnet sind. Die Lagerträger 14 haben
Stützarme 14a für Kulissenschalen 15. Darauf stützt sich

. . . . .

0186743

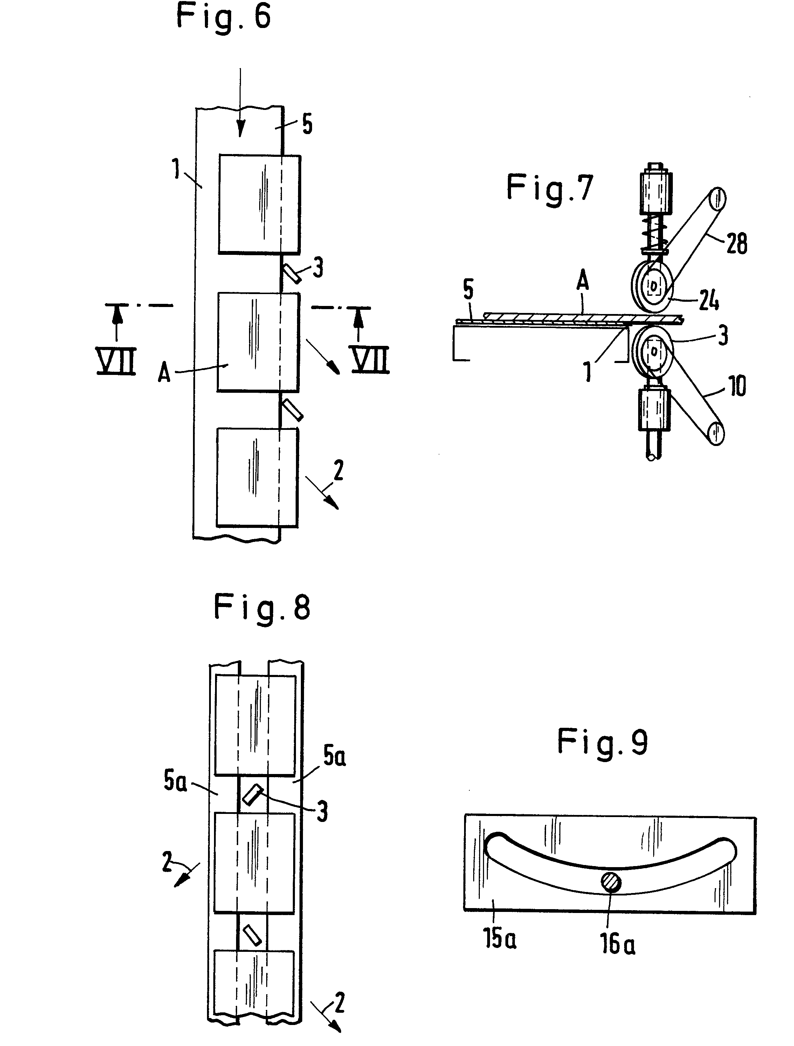

jeweils ein über einen Hebel 17 mit der Schwenkwelle 12 verbundener Kulissenfühler 16 ab, wie Fig. 3 und 4 zeigen. Wenn die heb-und senkbaren Teile sehr leicht sind und möglicherweise nicht aufgrund des Eigengewichtes in die untere Lage zurückfallen, kann die Kulissenschale als Führungsrille 15a für einen Kulissenstift 16a nach Fig. 9 ausgebildet sein. Die Kulissenfühler 16 sind sonst Hutmuttern von Stiften 18, mit denen alle Hebelarme 17 mit einer Koppelstange 19 verbunden sind. Diese ist, wie in Fig. 5 zu erkennen, mittels eines Mitnehmerstiftes 23 mit einem Eckhebel 20 verbunden, der mit einem Lagerbolzen 22 an einem Lagerauge 14b des Lagerträgers 14 schwenkbar gelagert ist und an den ein Stellmotor 21 mit seiner Kolbenstange 21a mittels eines Mitnehmerstiftes 23a angreift. Der Stellmotor 21 ist in Fig. 5 in der Mittelage gezeichnet und kann seine Kolbenstange 21a einziehen und ausfahren, wobei der Eckhebel 20 um seinen Lagerpunkt 22 verschwenkt wird und über seinen Mitnehmerstift 23 die Koppelstange 19 nach links oder rechts verschwenkt. Dabei bewegen sich die mit der Kolbenstange 19 verbundenen Kulissenfühler 16 auf den Kulissenschalen 15 entlang und werden angehoben, wie man beim Betrachten der Fig. 4 verstehen kann. Dabei werden auch die über die Hebelarme 17 mit der Koppelstange 19 verbundenen Schwenkwellen 12 mit ihren Austragscheiben 3 verschwenkt und über das Förderband 5 hinaus angehoben, damit das Fördergut entsprechend dem Ausschleusbefehl auf den gewünschten Sortierförderer 2 gebracht wird, wo es von der erforderlichenfalls vorgelagerten Mitnehmerwelle 2a erfaßt wird.

Bei Förderanlagen zum Transport flacher Materialien wie Zeitungen, dünne Bleche oder Hölzer können oberhalb der Austragscheiben 3 in Fig. 3 gezeichnete Friktionsscheiben 24 angeordnet sein. Sie sind auf Wellen 25 gelagert, die in Buchsen 26 geführt und entgegen dem Druck von Federn 27 axial verschiebbar sind. Die Friktionsscheiben 24 können über Riemen 28 mit einem nicht näher gezeichneten Antrieb verbunden sein. Die Wellen 25 können drehbar

.....

in den Buchsen 26 gelagert sein, die an einem Träger 29 befestigt sind. Die federnden Friktionsscheiben verhindern ein Hochspringen dünner Teile, die sich sonst aufgrund ihrer kinetischen Energie in der bisherigen Richtung weiterbewegen könnten.

Beim Ausführungsbeispiel nach den Fig. 6 und 7 ragt das Fördergut "A" einseitig über über das auf dem Hauptförderer 1 gleitende Förderband 5 hinaus und kann zum Ausschleusen auf den Sortierförderer 2 angehoben werden, wenn die entsprechende Austragscheibe 3 angehoben wurde. Die Austragscheiben 3 sind direkt neben der Hauptförderbahn 1 vor den Sortierförderern 2 angeordnet und schieben das Fördergut auf diesen, wobei die über den Austragscheiben 3 angeordneten Friktionsscheiben 24 das bloße Anheben des Fördergut-Randes verhindern.

Beim Ausführungsbeispiel nach Fig. 8 ist das Förderband in zwei Seitenstreifen aufgeteilt. Im freien mittleren Bereich sind die heb- und senkbaren sowie schwenkbaren Austragscheiben 3 angeordnet zum Ausschleusen der Fördergüter "A" zum linken oder rechten Sortierförderer 2.

18. Dezember 1984
23827 - Ko /Schi

## Bezeichnungsliste

| | | | |
|---|---|---|---|
| 1 | Hauptförderer | 16 | Kulissenfühler |
| 1a | Tragplatte | 17 | Hebelarm |
| 2 | Sortierförderer | 18 | Stift |
| 2a | Mitnehmerrolle | 19 | Koppelstange |
| 3 | Austragscheibe | 20 | Eckhebel |
| 4 | Seitenführung | 21 | Stellmotor |
| 5 | Förderband | 22 | Lagerbolzen |
| 6 | Umlenkrolle | 23 | Mitnehmerstift |
| 7 | Umlenktreibrolle | 24 | Friktionsscheibe |
| 7a | Welle | 25 | Welle |
| 7b | Treibscheibe | 26 | Buchse |
| 8 | Treibgurt | 27 | Feder |
| 9 | Welle | 28 | Riemen |
| 9a | Scheibe | 29 | Träger |
| 9b | Treibscheibe | 30 | Lagereinheit |
| 10 | Treibriemen | | |
| 11 | Riemenscheiben | | |
| 11a | Achse | | |
| 12 | Schwenkwelle | | |
| 13 | Lager | | |
| 14 | Lagerträger | | |
| 14a | Stützarm | | |
| 15 | Kulissenscheibe | | |

0186743

Mannesmann Aktiengesellschaft
Mannesmannufer 2
4000 Düsseldorf

18. Dezember 1984
23827 - Ko /Schi

---

## Förderanlage

---

## Patentansprüche

1. Förderanlage mit von einem Hauptförderer abzweigenden Sortierförderern und in dem Hauptförderer vor den Sortierförderern angeordneten, heb- und senkbaren, in Ausschleusrichtung weisenden Ausschleusscheiben,

dadurch gekennzeichnet,

daß die Ausschleusscheiben (3) mit ihren waagerechten Achsen (11a) an senkrechten, in Führungen (13) heb- und senkbaren sowie um die senkrechte Achse schwenkbaren Drehwellen (12) gelagert sind, die über mit in Richtung des Hauptförderers (1) nach vorne oder hinten ragenden Hebelarmen (17) mit einer gemeinsamen, quer zum Hauptförderer (1) verschiebbaren Koppelstange (19) verbunden sind und daß sich mindestens ein Hebelarm (17) mit einem Kulissenfühler (16) auf einer Kulissenschale (15) abstützt, die in der Mitte die niedrigste Stelle hat und zu den Seiten hin ansteigt.

.....

0186743

2. Förderanlage nach Anspruch 1,
dadurch gekennzeichnet,
daß alle Hebelarme (17) mit Kulissenfühlern (16) auf Kulissenschalen (15 abgestützt sind.

3. Förderanlage nach Anspruch 2,
dadurch gekennzeichnet,
daß die Kulissenfühler (16) Kugelköpfe oder Hutmuttern sind.

4. Förderanlage nach Anspruch 1,
dadurch gekennzeichnet,
daß die Koppelstange (19) über einen Mitnehmerstift (23) mit
einem Eckhebel (20) verbunden ist, der neben den Schwenkwellen
(12) mit einem senkrechten Lagerbolzen (22) an einem Lagerträger
(14) gelagert ist und an dem eine Kolbenstange (21a) eines mit
seiner Längsachse parallel zum Hauptförderer (1) angeordneten
Stellmotors (21) mit einem Mitnehmerstift (23a) angreift.

5. Förderanlage nach Anspruch 4,
dadurch gekennzeichnet,
daß der Eckhebel (20) mit den Bohrungen für den Lagerbolzen (22)
und die Mitnehmerstifte (23, 23a) ein Dreieck bildet.

6. Förderanlage nach Anspruch 1,
dadurch gekennzeichnet,
daß das Förderband (5) vor den Anschlußstellen der Sortierförderer (2) U-förmig um unter dem Förderband (5) angeordnete Umlenkrollen (6) und um eine tiefer liegende Umlenktreibrolle (7) geführt ist, auf deren Achse (7a) eine Treibscheibe (7b) für einen
dehnbaren Treibgurt (8) befestigt ist, der eine Scheibe (9a)
treibt, auf deren Welle (9) Treibscheiben (9b) für Treibriemen
(10) befestigt sind, die um den Austragscheiben (3) zugeordnete,
mit ihren Achsen (11a) an den Schwenkwellen (12) gelagerte Riemenscheiben (11) geführt sind.

.....

7. Förderanlage nach einem oder mehreren der vorgenannten Ansprüche,
dadurch gekennzeichnet,
daß die Teile der Hub- und Schwenkvorrichtung für die Austragscheiben (3) im Raum über der Umlenktreibrolle (7) zwischen den
Umlenkrollen (6) angeordnet sind.

8. Förderanlage nach Anspruch 1,
dadurch gekennzeichnet,
daß die Kulissenschale (15) eine nach oben und unten geschlossene
Führungsrille (15a) für einen von einer Stirnseite hineinragenden, an dem Hebelarm (17) befestigten Kulissenstift (16a) hat.

9. Förderanlage nach Anspruch 1,
dadurch gekennzeichnet,
daß eine Austragscheibe (3) neben dem Hauptförderer (1) vor dem
Sortierförderer (2) angeordnet ist.

10. Förderanlage nach Anspruch 1,
dadurch gekennzeichnet,
daß das Förderband in zwei Seitenstreifen (5a) unterteilt ist,
zwischen denen die Austragscheiben (3) angeordnet sind.

11. Förderanlage nach einem oder mehreren der vorgenannten Ansprüche,
dadurch gekennzeichnet,
daß über den Austragscheiben (3) mit diesen bezüglich der Ausschleusrichtung übereinstimmenden Friktionsscheiben (24) angeordnet sind.

12. Förderanlage nach Anspruch 11,
dadurch gekennzeichnet,
daß die Friktionsscheiben (24) an senkrechten Wellen (25) gelagert sind, die entgegen der Kraft von Federn (27) in einer an
einem Träger (29) befestigten Buchsen (26) heb- und senkbar gelagert sind.

.....

Fig. 2

Fig. 1

1/3

0186743

0186743

Fig. 3

Fig. 4

Fig. 5

Fig. 6

Fig.7

Fig.8

Fig.9

**Europäisches Patentamt**

## EUROPÄISCHER RECHERCHENBERICHT

| | EINSCHLÄGIGE DOKUMENTE | | EP 85112991.6 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
| A | <u>DE - A1 - 2 916 780</u> (ERMANCO INC.) <br> * Fig. 3 * <br><br> ---- | 1 | B 65 G 47/46 |
| | | | **RECHERCHIERTE SACHGEBIETE (Int. Cl.4)** <br><br> B 65 G |

Der vorliegende Recherchenbericht wurde für alle Patentansprüche erstellt.

| Recherchenort | Abschlußdatum der Recherche | Prüfer |
|---|---|---|
| WIEN | 26-03-1986 | PISSENBERGER |